(19) Europäisches Patentamt
European Patent Office
Office européen des brevets

(11) **EP 3 907 522 A2**

(12) **EUROPEAN PATENT APPLICATION**

(43) Date of publication:
**10.11.2021 Bulletin 2021/45**

(51) Int Cl.:
**G01S 7/40** *(2006.01)*          **G01S 13/931** *(2020.01)*
**G01S 13/42** *(2006.01)*          **G01S 13/87** *(2006.01)*
**G01S 7/41** *(2006.01)*          **G01S 13/58** *(2006.01)*

(21) Application number: **21166327.3**

(22) Date of filing: **31.03.2021**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.05.2020 EP 20172809**

(71) Applicant: **Aptiv Technologies Limited
St. Michael (BB)**

(72) Inventors:
• **RÓZEWICZ, Maciej
30-702 Kraków (PL)**
• **KOGUT, Krzysztof
30-612 Kraków (PL)**
• **POREBSKI, Jakub
30-669 Kraków (PL)**
• **BURZA, Rafal Michal
33-100 Tarnów (PL)**
• **BORKOWSKI, Dariusz
30-689 Kraków (PL)**

(74) Representative: **Manitz Finsterwald
Patent- und Rechtsanwaltspartnerschaft mbB
Martin-Greif-Strasse 1
80336 München (DE)**

(54) **METHODS AND SYSTEMS FOR DETERMINING ALIGNMENT PARAMETERS OF A RADAR SENSOR**

(57)     A computer implemented method for determining alignment parameters of a radar sensor comprises the following steps carried out by computer hardware components: determining measurement data using the radar sensor, the measurement data comprising a range-rate measurement, an azimuth measurement, and an elevation measurement; determining a velocity of the radar sensor; and determining the misalignment parameters based on the measurement data and the velocity, the misalignment parameters comprising an azimuth misalignment, an elevation misalignment, and a roll misalignment.

Fig. 1B

EP 3 907 522 A2

**Description**

FIELD

The present disclosure relates to methods and systems for determining alignment parameters of a radar sensor.

BACKGROUND

Radar-sensors, for example in automotive applications, need to be aligned with the chassis of a host-vehicle so that the location of detected objects is accurately known. Alignment procedures performed when the host-vehicle is assembled are not able to compensate for pitch or elevation errors caused by heavy cargo and yaw, azimuth or roll errors caused by miss-alignment of the wheels or chassis of the host-vehicle which may cause 'crabbing' or 'dog-tracking' by the host-vehicle while traveling.

Accordingly, there is a need to provide for reliable determination of alignment parameters.

SUMMARY

The present disclosure provides a computer implemented method, a radar system, a computer system, a vehicle, and a non-transitory computer readable medium according to the independent claims. Embodiments are given in the subclaims, the description and the drawings.

In one aspect, the present disclosure is directed at a computer implemented method for determining alignment parameters of a radar sensor, the method comprising the following steps performed (in other words: carried out) by computer hardware components: determining measurement data using the radar sensor, the measurement data comprising a range-rate measurement, an azimuth measurement, and an elevation measurement; determining a velocity (in other words: speed) of the radar sensor (for example using a velocity sensor or together with the misalignment parameters); and determining the misalignment parameters based on the measurement data and the velocity, the misalignment parameters comprising an azimuth misalignment, an elevation misalignment, and a roll misalignment.

It will be understood that determining a velocity of the radar sensor may either be carried out explicitly (for example using a velocity sensor) or implicitly (for example by including the velocity into an optimization problem, as described for the 2D case and for the 3D case herein).

According to various embodiments, misalignment parameters may be determined by comparing a velocity determined by a velocity sensor (which may be independent from the radar sensor) and velocity information which is determined based on radar measurement data.

The measurements data may be related to the radar sensor, for example to a radar sensor mounted on a vehicle (for example at least partially autonomously driving vehicle, for example car), for example on the chassis of the vehicle. The velocity sensor may be external to the radar sensor; for example, the velocity sensor may be the velocity sensor of a vehicle, for example based on odometry measurements, gyroscope measurements, and/or acceleration measurements.

According to another aspect, the misalignment parameters further comprise a speed-scaling error.

It has been found that provided a three-axial-auto-alignment with speed-scaling-error estimation improves the detection quality of radar sensors.

According to another aspect, the computer implemented method further comprises the following step carried out by the computer hardware components: determining system parameters, the system parameters comprising at least one of a desired azimuth mounting angle, a desired elevation mounting angle, and a desired roll mounting angle; wherein the misalignment parameters are determined further based on the system parameters.

The system parameters may be set by the manufacturer of the system (for example vehicle) on which the radar sensor is provided. The system parameters may describe or define how the radar sensor is provided (for example mounted) in the vehicle.

According to another aspect, the measurement data is related to a plurality of objects external to the radar sensor. For example, measurement results related to at least three objects may be provided. For example, measurement results related to at least four objects may be provided. For example, measurement results related to at least five objects may be provided. The number of objects may be chosen so that the system for determining the misalignment parameters is at least not under-determined, for example so that the system is over-determined (i.e. more measurement results may be available than unknown misalignment parameters are to be determined; this may allow for implicit correction of measurement inaccuracies or measurement errors, for example by using regression methods to determine the misalignment parameters).

The objects may be provided outside a vehicle in which the radar sensor is provided.

According to another aspect, the plurality of objects are stationary. Thus, it may be considered known that the velocity determined by the velocity sensor is identical to the (relative) velocity of the stationary objects (relative to the radar sensor). This may be used for determining the misalignment parameters by determining the misalignment parameters so that the velocity determined based on the radar measurements is in agreement with the velocity determined by the velocity sensor (for example so that the difference between the velocity determined based on the radar measurements is in agreement with the velocity determined by the velocity sensor is minimized).

According to another aspect, the misalignment parameters are determined based on an iterative method.

A closed-form solution to the determination of the misalignment parameters may not be available, or may be numerically instable. An iterative method may be used, starting from an initial estimate (or guess), for example with all misalignment parameters set to a default value (for example 0). The estimate values may be iteratively updated. The misalignment parameters may already be of reasonable accuracy after one iteration. Depending on the resources like time and computational power, more than one iteration may be performed. The iterations may continue until a pre-determined stop criterion is reached, for example a maximum time available for the determination of the misalignment parameters, or a pre-determined accuracy of the misalignment parameters (which may for example be determined based on how much (for example absolutely or relatively) the estimates for the misalignment parameters change from one iteration to the next iteration).

According to another aspect, the misalignment parameters are determined based on an optimization method.

The optimization method may optimize the misalignment parameters so that the difference between the velocity measured by the velocity sensor and the velocity which is determined based on the measurement data is minimized. The optimization method may determine the misalignment parameters from an overdetermined system (wherein more measurements, for example related to a plurality of objects, are available than would be required for a closed form determination of the misalignment parameters). The optimization method may use the Jacobian matrix, including partial derivatives of the modeled output with respect to the misalignment parameters.

According to another aspect, the misalignment parameters are determined based on a non-linear least squares regression method. According to another aspect, the misalignment parameters are determined based on an non-linear total least squares regression method.

According to another aspect, the misalignment parameters are determined based on filtering. For example, the misalignment parameters that have been determined based on the optimization or regression method may be subject to filtering, for example Kalman filtering, to further improve the misalignment parameters.

According to another aspect, the measurement data are determined using a plurality of radar sensors (which may include the radar sensor and at least one further radar sensor).

According to another aspect, the velocity of the radar sensor and the misalignment parameters are determined simultaneously by solving an optimization problem.

With the method according to various embodiments, the overall performance of the alignment may be improved, which may have a positive impact on the performance of further radar processing.

In another aspect, the present disclosure is directed at a computer implemented method for determining corrected measurement data, the method comprising the following steps carried out by computer hardware components: determining measurement data using a radar sensor; correcting the measurement data to obtain the corrected measurement data based on misalignment parameters determined according to the computer-implemented method described herein.

With the corrected measurement data, improved detection results may be achieved.

Based on the misalignment parameters, the control of the radar sensor (for example the area in which the radar sensor is to determine measurements) may be adjusted (for example to the desired area or desired field of view).

In another aspect, the present disclosure is directed at a computer system, said computer system comprising a plurality of computer hardware components configured to carry out several or all steps of the computer implemented method described herein. The computer system can be part of a vehicle.

The computer system may comprise a plurality of computer hardware components (for example a processor, for example processing unit or processing network, at least one memory, for example memory unit or memory network, and at least one non-transitory data storage). It will be understood that further computer hardware components may be provided and used for carrying out steps of the computer implemented method in the computer system. The non-transitory data storage and/or the memory unit may comprise a computer program for instructing the computer to perform several or all steps or aspects of the computer implemented method described herein, for example using the processing unit and the at least one memory unit.

In another aspect, the present disclosure is directed at a radar system comprising a radar sensor for which the misalignment parameters are determined according to the computer implemented method described herein.

In another aspect, the present disclosure is directed at a vehicle comprising the radar system described herein.

In another aspect, the present disclosure is directed at a non-transitory computer readable medium comprising instructions for carrying out several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented method described herein.

DRAWINGS

Exemplary embodiments and functions of the present disclosure are described herein in conjunction with the following drawings, showing schematically:

Fig. 1A     an illustration of a radar field-of-view when misaligned in azimuth and elevation;

Fig. 1B     an illustration of a three-dimensional misalignment in azimuth, elevation, and roll;

Fig. 2      a flow diagram illustrating an overview of methods for determining alignment parameters according to various embodiments;

Fig. 3      an illustration of a radar field-of-view after introduction of roll misalignment;

Fig. 4      an illustration of a radar field-of-view and a compensated field-of-view according to various embodiments;

Fig. 5      a diagram illustrating azimuth alignment error distribution according to various embodiments;

Fig. 6      a diagram illustrating elevation alignment error distribution according to various embodiments;

Fig. 7      a diagram illustrating roll alignment error distribution according to various embodiments;

Fig. 8      a flow diagram illustrating a method for determining alignment parameters of a radar sensor according to various embodiments;

Fig. 9      an alignment parameter estimation system according to various embodiments; and

Fig. 10     a computer system with a plurality of computer hardware components configured to carry out steps of a computer implemented method for determining alignment parameters of a radar sensor according to various embodiments;

Fig. 11     an illustration of the vehicle coordinate system location;

Fig. 12     an illustration of a sensor coordinate system with relation to the vehicle coordinate system (VCS); and

Fig. 13     an illustration of detection definition in the sensor coordinate systems.

DETAILED DESCRIPTION

Radar alignment is a process of determining the angular misalignment of radar facing direction. Correction of those mounting errors may be crucial for proper operation of radar based tracking methods and most of the feature functions that operate on detections or tracked objects provided by a radar sensor. Two main classes of methods/approaches aimed at solving misalignment problem are:

1) static alignment methods, which may also be called factory alignment, due to the reason that they require specialized equipment to perform the calibration process; most commonly used static methods use corner reflectors, Doppler generators, or steel plates;

2) dynamic alignment methods, which may also be called auto-alignment since they may not require any external (additional) equipment (devices) for the process. The radar sensor is correcting its facing angles based on observation of the environment while the car is moving (i.e. driving).

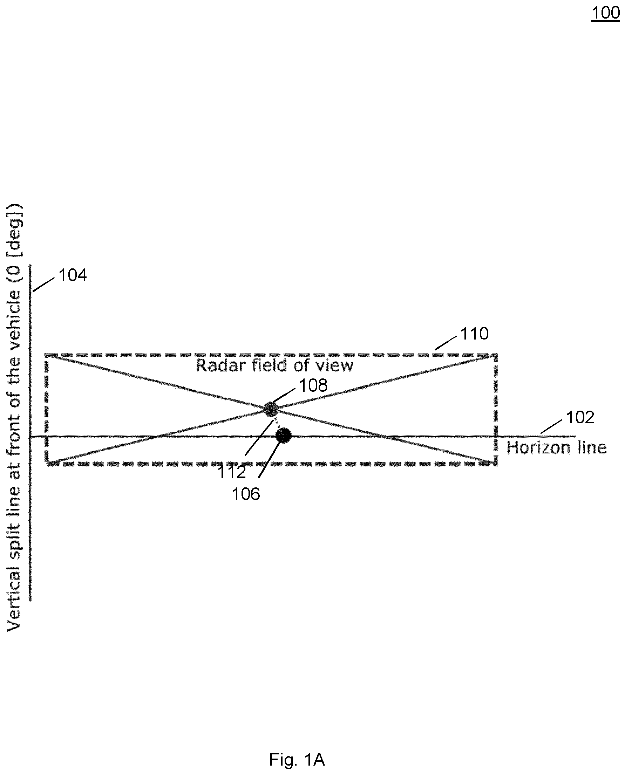

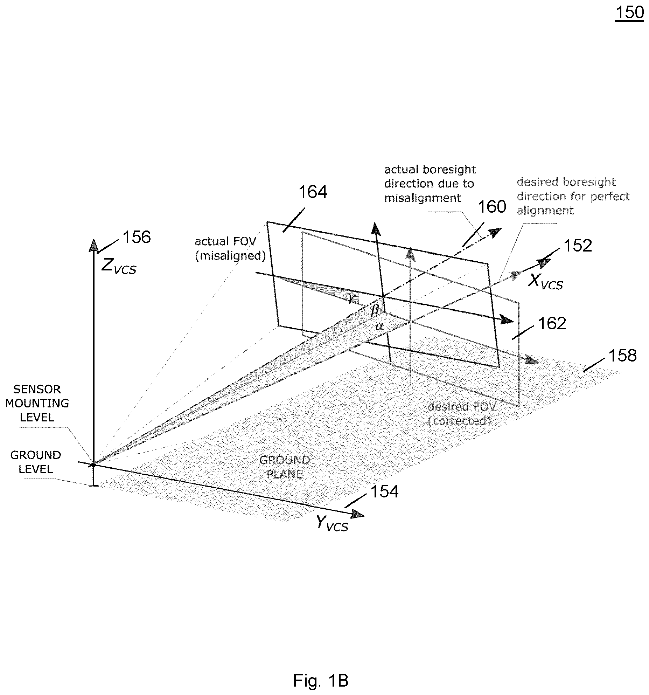

Fig. 1A and Fig. 1B shows illustrations 100 and 150 of misalignment and radar field-of-view relationship.

Fig. 1A shows an illustration 100 of a radar field-of-view 110 when misaligned in azimuth (along a horizontal line 102) and elevation (along a vertical split line 104 at the front of the vehicle, which corresponds to 0 deg). The ideal (or desired or assumed) facing angle 106 is different from the real (or actual) facing angle 108, so that a misalignment 112 is present.

Fig. 1B shows an illustration 150 of a three-dimensional misalignment in azimuth ($\alpha$), elevation ($\beta$), and roll (y). Coordinates axis are illustrated in the vehicle coordinate system (VCS), i.e. Xvcs 152, Yvcs 154, and Zvcs 156. The ground plane 158 is illustrated. The radar sensor may be mounted above ground plane 158 at the origin of the vehicle coordinate system. The desired boresight direction for perfect alignment would coincide with Xvcs 152. However, the actual boresight direction 160 is different from Xvcs 152 due to the misalignment, and the difference between the actual boresight direction 160 and Xvcs 152 may be described by the three-dimensional misalignment in azimuth ($\alpha$), elevation ($\beta$), and roll ($\gamma$). Due to the misalignment, the desired FOV 162 (field of view) may be different from the actual FOV 164. However, the desired FOV 162 may be obtained by correction based on misalignment parameters based on the actual FOV 164.

To calculate the misalignment in case of a misalignment in azimuth and elevation (disregarding a possible misalignment in roll), the range rate equation of stationary detections may be used. It may be derived from the projection of the negative vehicle velocity vector to the vector of distance, which forms the equation below:

$$\dot{r} = -V_X \cos \alpha_{VCS} \cos \beta_{VCS} - V_Y \sin \alpha_{VCS} \cos \beta_{VCS} - V_Z \sin \beta_{VCS} \qquad (1)$$

where:

- $\dot{r}$ is the range rate (Doppler velocity of stationary detection);
- $V_X$ is the longitudinal velocity of the vehicle (which may be a vector facing forward from vehicle, parallel to the ground plane; Vx may be the length of that vector);
- $V_Y$ is the lateral velocity of the vehicle (which may be a vector facing left side of vehicle, parallel to the ground plane; Vy may be the length of that vector);
- $V_Z$ is the vertical velocity of the vehicle (which may be a vector facing ground, perpendicular to the ground plane; Vz may be the length of that vector);
- $\alpha_{VCS}$ is the azimuth measurement of detection aligned to vehicle coordinate system (wherein the 0 [deg] angle may be defined as facing the same direction as the front of the vehicle on which the radar sensor is mounted); and
- $\beta_{VCS}$ is the elevation measurement of detection aligned to vehicle coordinate system.

VCS aligned measurement angles may be decomposed into sensor mounting angles, sensor detection measurement angles as well as sensor mounting misalignment angles:

$$\alpha_{VCS} = \alpha_{SCS} + \alpha_B + \alpha_M \qquad (2)$$

$$\beta_{VCS} = \beta_{SCS} + \beta_B + \beta_M \qquad (3)$$

where:

- $\alpha_{SCS}$ is the azimuth measurement of detection in sensor coordinate system (SCS);
- $\alpha_B$ is the desired azimuth mounting angle;
- $\alpha_M$ is the desired azimuth misalignment;
- $\beta_{SCS}$ is the elevation measurement of detection in sensor coordinate system;
- $\beta_B$ is the desired elevation mounting angle; and
- $\beta_M$ is the elevation misalignment.

Further expanding the equation with speed correction factor $V_c$ (which may also be referred to as (vehicle) speed-scaling-error or speed compensation factor) leads to:

$$V_X = \frac{V_{Xm}}{1 + V_c} \qquad (4)$$

$$V_Y = \frac{V_{Ym}}{1 + V_c} \tag{5}$$

$$V_Z = \frac{V_{Zm}}{1 + V_c} \tag{6}$$

where:

- $V_{Xm}$ is the measured longitudinal velocity of vehicle;
- $V_{Ym}$ is the measured lateral velocity of vehicle;
- $V_{Zm}$ is the measured vertical velocity of the vehicle; and
- $V_c$ is the speed-scaling-error.

An equation may be created which may be used to find unknown parameters (B), based on measurements (X), known constants (C) and equation result (Y) as follows:

$$f(C\{\alpha_B, \beta_B\}, X\{\alpha_{SCS}, \beta_{SCS}, V_{Xm}, V_{Ym}, V_{Zm}\}, B\{\alpha_M, \beta_M, V_c\}) = Y\{\dot{r}\} \tag{7}$$

Various methods, such as iterative non-linear least squares regression or error-in-variables methods, may be used to determine the unknown parameters. The parameters found by these methods may then further be refined by filtering in time methods such as Kalman filter.

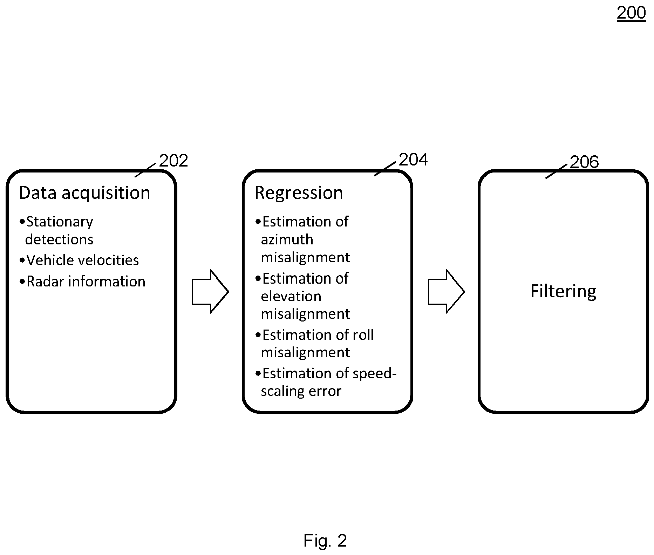

Fig. 2 shows a flow diagram 200 illustrating an overview of methods for determining alignment parameters according to various embodiments (either not taking into account a misalignment in roll angle, or taking into account a misalignment in roll angle, like will be described in more detail below). At 202, data acquisition may be carried out, which may include stationary detections, vehicle velocities, and radar information. At 204, regression may be carried out, for example including estimation of azimuth misalignment, estimation of elevation misalignment, estimation of roll misalignment (as will be described in more detail below), and estimation of speed-scaling error. At 206, filtering (for example using a Kalman filter) may be provided.

Significant roll misalignment angle of the sensor (desired sensor roll is usually zero) can greatly impact the azimuth and elevation measurements, because it reduces radar field of view as shown below.

Roll angle misalignment may influence the azimuth-elevation misalignment calculation itself.

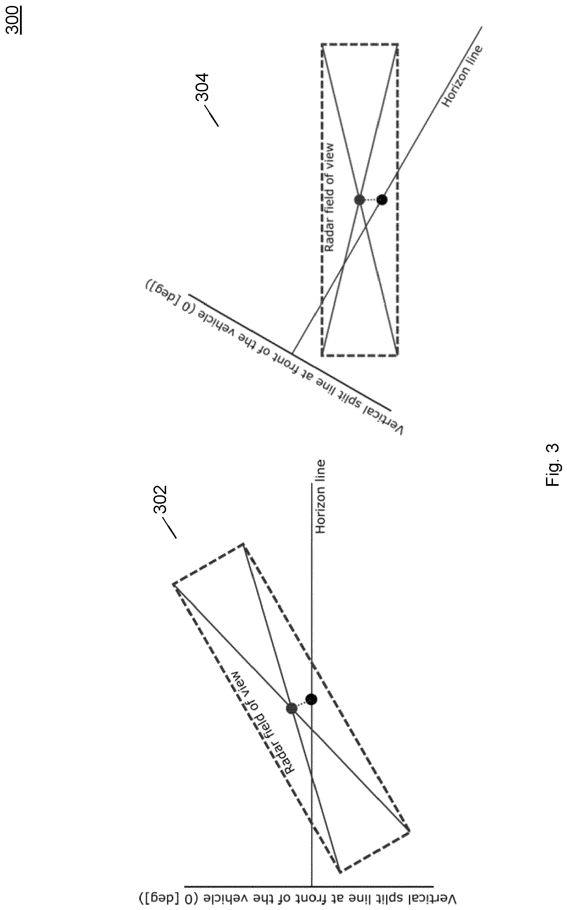

Fig. 3 shows an illustration 300 of a radar field-of-view after introduction of roll misalignment, similar to what is shown in Fig. 1A (wherein in Fig. 1A no roll misalignment is illustrated). Illustration 302 in the left portion of Fig. 3 shows an illustration from the ground perspective, and illustration 304 in the right portion of Fig. 3 shows an illustration from the sensor perspective.

As can be seen from Fig. 3, if the roll misalignment would not be taken into account, the azimuth misalignment may be taken as 0 (zero) or close to 0, and the elevation misalignment may be estimated to be greater than the correct value of the elevation misalignment, due to the fact that the ideal facing angle is exactly below the reported facing angle as seen by the radar sensor. This may result in finding wrong misalignment parameters, for example zero azimuth misalignment and too high elevation misalignment value.

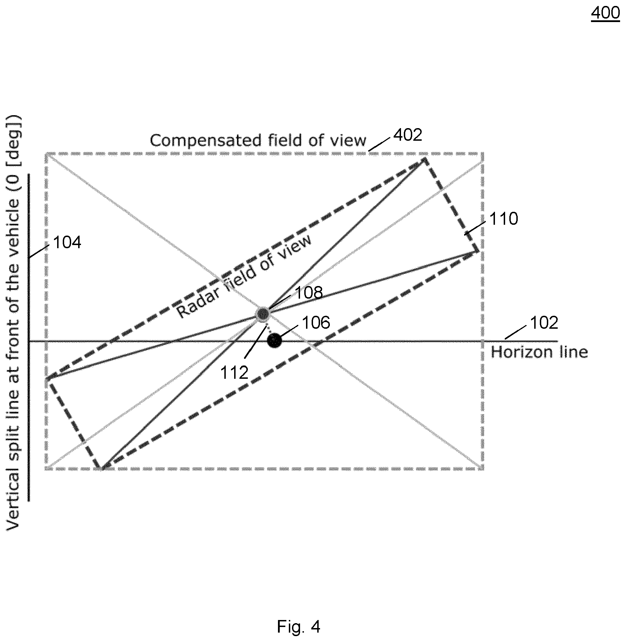

The impact of the roll angle misalignment may be almost unobservable for small angles (for example less than 1 [deg]), and may be growing exponentially with the roll, introducing highest error at the corners of field-of-view. At a 30 [deg] radar roll (i.e. a misalignment of the radar sensor in roll angle of 30 deg), as is illustrated in Fig. 3 and Fig. 4, the error is reducing the field of view of radar by half (the sensor may observe ground in near vicinity of front of the vehicle, and the sky above on the opposite side of FOV; however, both the ground and the sky regions are irrelevant from the active safety methods perspective). At the same time, a significant part of important information about objects located approximately 0.5 m above the ground is missed. Furthermore, an undetected roll angle misalignment may make the azimuth and elevation misalignment angles unreliable. For example, an object at 60 deg azimuth and 5 deg elevation under influence of 5 deg sensor roll misalignment will be reported at azimuth 60.20 deg and -0.2484 deg elevation.

The radar roll angle misalignment may be determined by extending the range rate equation, which makes estimation of the roll angle possible. The equation may further improve estimation of yaw and pitch angle misalignments. After the estimation of 3 angle misalignments (yaw, pitch, roll) the measured detections may be corrected to represent detections in vehicle coordinate system or in extreme misalignment the estimated value may trigger an alert which will stop the execution of further radar functions.

The range rate equation (1) may be used together with equations (2) and (3), which may be extended with the roll angle influence, what leads to following equations:

$$\alpha_{VCS} = \alpha_{SCS}{}' + \alpha_B + \alpha_M \tag{8}$$

$$\beta_{VCS} = \beta_{SCS}{}' + \beta_B + \beta_M \tag{9}$$

$$\alpha'_{SCS} = \alpha_{SCS} \cos(\gamma_M + \gamma_B) - \beta_{SCS} \sin(\gamma_M + \gamma_B) \tag{10}$$

$$\beta'_{SCS} = \alpha_{SCS} \sin(\gamma_M + \gamma_B) + \beta_{SCS} \cos(\gamma_M + \gamma_B) \tag{11}$$

where:

- $\alpha'_{SCS}$ is the azimuth measurement corrected by roll misalignment in sensor coordinate system;
- $\beta'_{SCS}$ is the elevation measurement corrected by roll misalignment in sensor coordinate system;
- $\gamma_M$ is the roll misalignment; and
- $\gamma_B$ is the roll ideal mounting position (which may usually be 0 deg or 180 deg).

Therefore, $\alpha'_{SCS}$ and $\beta'_{SCS}$ may be visualized as detections with the same distance from radar center of view (0, 0), but rotated (aligned) w.r.t. horizon line (assuming desired roll mounting angle of 0 [deg]), forming a 'compensated field of view' as shown on Fig. 4.

Fig. 4 shows an illustration 400 of a radar field-of-view 110 and a compensated field-of-view 402 according to various embodiments. Various portions of Fig. 4 are similar or identical to portions of Fig. 1A, so that the same reference signs may be used and duplicate description may be omitted.

After substitution of eqns. (8) and (9) ($\alpha'$ and $\beta'_{SCS}$) to eqns. (2) (3) for $\alpha_{SCS}$ and $\beta_{SCS}$, respectively, the following equations may be obtained:

$$\alpha_{VCS} = \alpha_{SCS} \cos(\gamma_M + \gamma_B) - \beta_{SCS} \sin(\gamma_M + \gamma_B) + \alpha_B + \alpha_M \tag{12}$$

$$\beta_{VCS} = \alpha_{SCS} \sin(\gamma_M + \gamma_B) + \beta_{SCS} \cos(\gamma_M + \gamma_B) + \beta_B + \beta_M \tag{13}$$

This change modifies the general model in equation (7) to:

$$f(C\{\alpha_B, \beta_B, \gamma_B\}, X\{\alpha_{SCS}, \beta_{SCS}, V_{Xm}, V_{Ym}, V_{Zm}\}, B\{\alpha_M, \beta_M, \gamma_M, V_c\}) = Y\{\dot{r}\} \tag{14}$$

The general form of this model can be derived from range rate equation (1)

$$
\begin{aligned}
\dot{r} = &-\frac{V_{Xm}}{1+V_c} \cos(\alpha_{SCS} \cos(\gamma_M + \gamma_B) - \beta_{SCS} \sin(\gamma_M + \gamma_B) + \alpha_B + \alpha_M) \cdot \\
&\cos(\alpha_{SCS} \sin(\gamma_M + \gamma_B) + \beta_{SCS} \cos(\gamma_M + \gamma_B) + \beta_B + \beta_M) - \\
&\frac{V_{Ym}}{1+V_c} \sin(\alpha_{SCS} \cos(\gamma_M + \gamma_B) - \beta_{SCS} \sin(\gamma_M + \gamma_B) + \alpha_B + \alpha_M) \cdot \\
&\cos(\alpha_{SCS} \sin(\gamma_M + \gamma_B) + \beta_{SCS} \cos(\gamma_M + \gamma_B) + \beta_B + \beta_M) - \\
&\frac{V_{Zm}}{1+V_c} \sin(\alpha_{SCS} \sin(\gamma_M + \gamma_B) + \beta_{SCS} \cos(\gamma_M + \gamma_B) + \beta_B + \beta_M)
\end{aligned}
\tag{15}
$$

Eq. (13) can be simplified with the assumption of the vehicle moving only in forward direction ($V_{Ym}$ and $V_{Zm}$ equal to 0) and elevation and roll desired mounting angles 0 [deg], to get the following form:

$$\dot{r} = -\frac{V_{Xm}}{1+V_c} \cos(\alpha_{SCS} cos\gamma_M - \beta_{SCS} \sin\gamma_M + \alpha_B + \alpha_M) \cdot \cos(\alpha_{SCS} \sin\gamma_M + \beta_{SCS} \cos\gamma_M + \beta_M) \quad (16)$$

Equation (16) may be used to compose (create) a overdetermined system of equations which can be solved by various methods to find parameters of interest i.e. misalignment angles and speed compensation factor. In an example, equation (14) may be used as a model for non-linear least square regression. For example, the model may be iterative, which means that the method will iterate over the same dataset containing data from one time instance to converge to the solution of non-linear equation in multiple steps defined by linearization of the model around its operating point:

$$(J^T \cdot J) \Delta B = J^T \cdot \Delta Y \quad (17)$$

The matrix equation (17) can be transformed to:

$$\Delta B = (J^T \cdot J)^{-1} \cdot J^T \cdot \Delta Y \quad (18)$$

where:

- $\Delta B$ is the update of parameters value in a single iteration (single step in a solution space);
- $J$ are the partial derivatives of model function over the parameters (which may be referred to as Jacobian matrix); and
- $\Delta Y$ is the difference between the measured output of the system and model output:

$$\Delta Y = \begin{bmatrix} \dot{r}_1 - f_1 \\ \vdots \\ \dot{r}_n - f_n \end{bmatrix} \quad (19)$$

The Jacobian matrix may take the following form:

$$J = \begin{bmatrix} \frac{\partial f_1}{\partial V_c} & \frac{\partial f_1}{\partial \alpha_M} & \frac{\partial f_1}{\partial \beta_M} & \frac{\partial f_1}{\partial \gamma_M} \\ \vdots & \vdots & \vdots & \vdots \\ \frac{\partial f_n}{\partial V_c} & \frac{\partial f_n}{\partial \alpha_M} & \frac{\partial f_n}{\partial \beta_M} & \frac{\partial f_n}{\partial \gamma_M} \end{bmatrix} \quad (20)$$

where:

$$\frac{\partial f_i}{\partial V_c} = \frac{V_{Xm}}{(1+V_c)^2} \cos(\alpha_{SCS}^i cos\gamma_M - \beta_{SCS}^i \sin\gamma_M + \alpha_B + \alpha_M) \cdot \cos(\alpha_{SCS}^i \sin\gamma_M + \beta_{SCS}^i \cos\gamma_M + \beta_M) \quad (21)$$

$$\frac{\partial f_i}{\partial \alpha_M} = \frac{V_{Xm}}{1+V_c} \sin(\alpha_{SCS}^i cos\gamma_M - \beta_{SCS}^i \sin\gamma_M + \alpha_B + \alpha_M) \cdot \cos(\alpha_{SCS}^i \sin\gamma_M + \beta_{SCS}^i \cos\gamma_M + \beta_M) \quad (22)$$

$$\frac{\partial f_i}{\partial \beta_M} = \frac{V_{Xm}}{1+V_c} \cos(\alpha_{SCS}^i cos\gamma_M - \beta_{SCS}^i \sin\gamma_M + \alpha_B + \alpha_M) \cdot \sin(\alpha_{SCS}^i \sin\gamma_M + \beta_{SCS}^i \cos\gamma_M + \beta_M) \quad (23)$$

$$\frac{\partial f_i}{\partial \gamma_M} = \frac{V_{Xm}}{1+V_c} \cos( \alpha_{SCS}^i cos\gamma_M - \beta_{SCS}^i \sin \gamma_M \; + \; \alpha_B + \alpha_M ) \cdot$$

$$\sin\left(\alpha_{SCS}^i \sin \gamma_M + \beta_{SCS}^i \cos \gamma_M + \; \beta_M\right) \cdot ( \alpha_{SCS}^i cos\gamma_M - \beta_{SCS}^i \sin \gamma_M ) \; -$$

$$\frac{V_{Xm}}{1+V_c} \sin(\alpha_{SCS}^i cos\gamma_M - \beta_{SCS}^i \sin \gamma_M \; + \; \alpha_B + \alpha_M ) \cdot \cos\left(\alpha_{SCS}^i \sin \gamma_M + \right. \qquad (24)$$

$$\left. \beta_{SCS}^i \cos \gamma_M + \; \beta_M\right) \cdot (\alpha_{SCS}^i sin\gamma_M + \beta_{SCS}^i \cos \gamma_M)$$

The non-linear regression model described by equations (18) to (24) may be solved after assuming initial values of parameters:

$$B_0 = \begin{cases} \begin{bmatrix} 0 \\ 0 \\ 0 \\ 0 \end{bmatrix} for\; m = 0 \\ \begin{bmatrix} V_{c\,m-1} \\ \alpha_{M\,m-1} \\ \beta_{M\,m-1} \\ \gamma_{M\,m-1} \end{bmatrix} for\; m > 1 \end{cases} \qquad (25)$$

where *m* is the number of successful alignment cycles (radar cycles). In other words, a misalignment of 0 in the azimuth, elevation and roll angles and in the speed-correction factor may be assumed as the starting point for the first iteration, and the results of the previous iteration may be used as starting point for the next iteration.

Therefore, equation (26) may update model parameter values with values at i-th iteration:

$$B_i = B_{i-1} + \Delta B_i \qquad (26)$$

$B_i$ may converge to real speed-scaling-error and misalignment angles at infinite number of iterations (or as iteration number approaches infinity):

$$\lim_{i \to \infty} B_i = \begin{bmatrix} V_c \\ \alpha_M \\ \beta_M \\ \gamma_M \end{bmatrix} \qquad (27)$$

The method according to various embodiments provides alignment parameters also for the roll axis, which accurately describes the physical model.

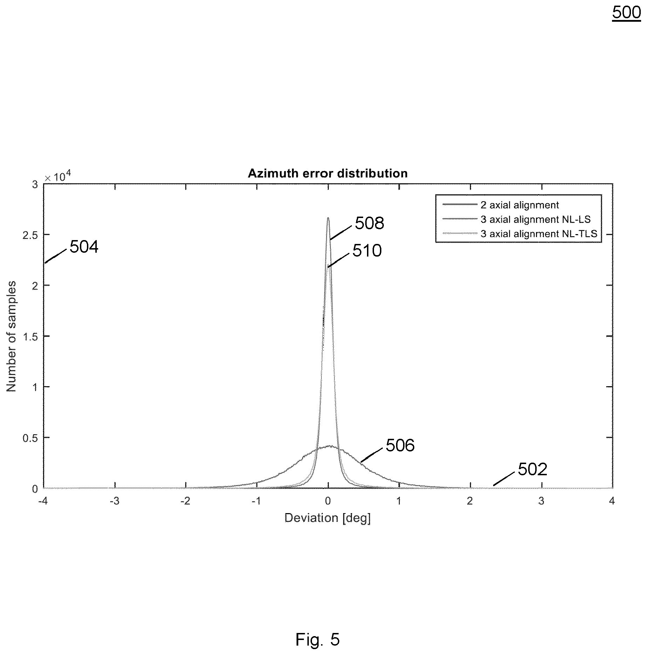

Fig. 5, Fig. 6 and Fig. 7 illustrate the performance of methods according to various embodiments over simulated data for random (nonzero) misalignments of all mounting angles i.e. azimuth, elevation and roll. The following simulation parameters were used:

- number of test cases (samples): 500 000 (same inputs for each method);
- misalignments (azimuth, elevation and roll): pseudorandom values drawn from uniform distribution on interval [-5:5] deg;
- azimuth boresight pseudorandom value drawn from uniform distribution on interval [-180; 180] deg;
- vehicle moving in a straight line (Xvcs direction);
- minimum vehicle speed: 11 m/s;
- number of detections: 64;
- azimuth Gaussian zero mean noise: Standard deviation 0.3 deg;
- elevation Gaussian zero mean noise: Standard deviation 1 deg ;
- range rate Gaussian zero mean noise: Standard deviation 0.03 m/s;
- vehicle velocity Gaussian zero mean noise in 3-axis : Standard deviation 0.2 m/s.

The result of only a single iteration (first iteration) of each of compared method is shown in each of Fig. 5, Fig. 6, and Fig. 7. NL-LS in the method name may stand for non-linear least squares regression used to find the solution, and NL-TLS may stand for non-linear total least squares regression. A 2-axial alignment with no roll estimation is shown for comparison purposes.

Fig. 5 shows a diagram 500 illustrating azimuth alignment error distribution according to various embodiments. The deviation angle is illustrated over a horizontal axis 502. The numbers of samples is illustrated over a vertical axis 504. The results for a 2 axial alignment are illustrated by curve 506. The results for a 3 axial alignment NL-LS method according to various embodiments are illustrated by curve 508. The results for a 3 axial alignment NL-TLS method according to various embodiments are illustrated by curve 510.

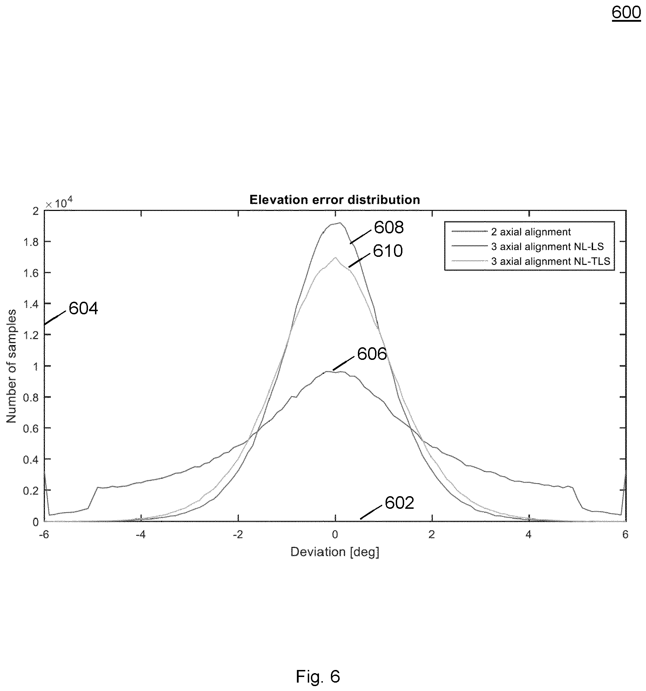

Fig. 6 shows a diagram 600 illustrating elevation alignment error distribution according to various embodiments. The deviation angle is illustrated over a horizontal axis 602. The numbers of samples is illustrated over a vertical axis 604. The results for a 2 axial alignment are illustrated by curve 606. The results for a 3 axial alignment NL-LS method according to various embodiments are illustrated by curve 608. The results for a 3 axial alignment NL-TLS method according to various embodiments are illustrated by curve 610.

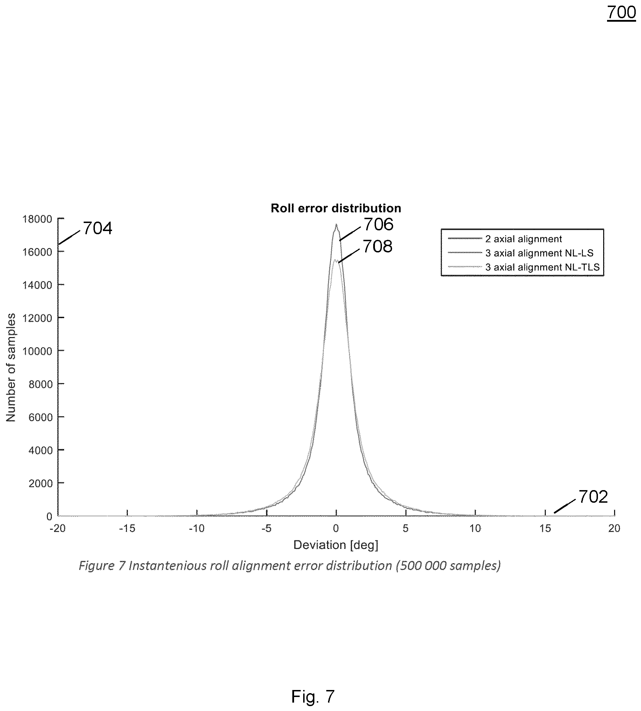

Fig. 7 shows a diagram 700 illustrating roll alignment error distribution according to various embodiments. The deviation angle is illustrated over a horizontal axis 702. The numbers of samples is illustrated over a vertical axis 704. The results for a 3 axial alignment NL-LS method according to various embodiments are illustrated by curve 706. The results for a 3 axial alignment NL-TLS method according to various embodiments are illustrated by curve 708.

As shown in Fig. 5 and Fig. 6, even one-time-instance-based (non-iterative) results are much better in case of azimuth and elevation misalignment estimation with 3-axial alignment compared to a 2-axial alignment.

Fig. 7 shows the error distribution of roll angle alignment, in this case 2 axial alignment is not available as it doesn't return the roll angle estimation.

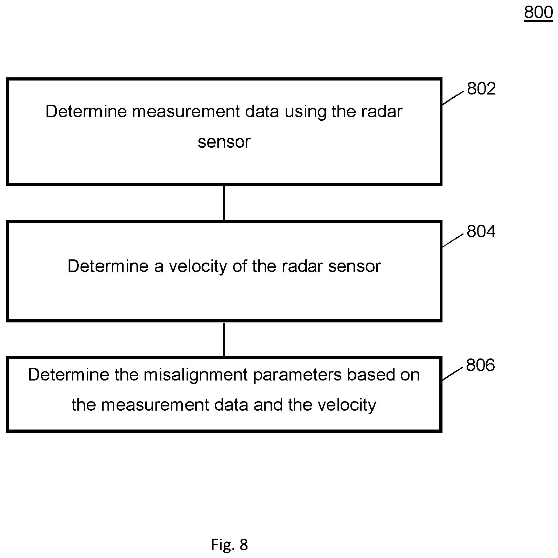

Fig. 8 shows a flow diagram 800 illustrating a method for determining alignment parameters of a radar sensor according to various embodiments. At 802, measurement data may be determined using the radar sensor, wherein the measurement data may include a range-rate measurement, an azimuth measurement, and an elevation measurement. At 804, a velocity of the radar sensor may be determined . At 806, the misalignment parameters may be determined based on the measurement data and the velocity, wherein the misalignment parameters may include an azimuth misalignment, an elevation misalignment, and a roll misalignment.

According to various embodiments, the misalignment parameters may further include a speed-scaling error.

According to various embodiments, system parameters may be determined, wherein the system parameters may include at least one of a desired azimuth mounting angle, a desired elevation mounting angle, and a desired roll mounting angle. The misalignment parameters may be determined further based on the system parameters.

According to various embodiments, the measurement data may be related to a plurality of objects external to the radar sensor.

According to various embodiments, the plurality of objects may be stationary.

According to various embodiments, the misalignment parameters may be determined based on an iterative method.

According to various embodiments, the misalignment parameters may be determined based on an optimization method.

According to various embodiments, the misalignment parameters may be determined based on a non-linear least squares regression method.

According to various embodiments, the misalignment parameters may be determined based on an non-linear total least squares regression method.

According to various embodiments, the misalignment parameters may be determined based on filtering.

According to various embodiments, the measurement data may be determined using a plurality of radar sensors.

According to various embodiments, the velocity of the radar sensor and the misalignment parameters may be determined simultaneously by solving an optimization problem.

Each of the steps 802, 804, 806 and the further steps described above may be performed by computer hardware components.

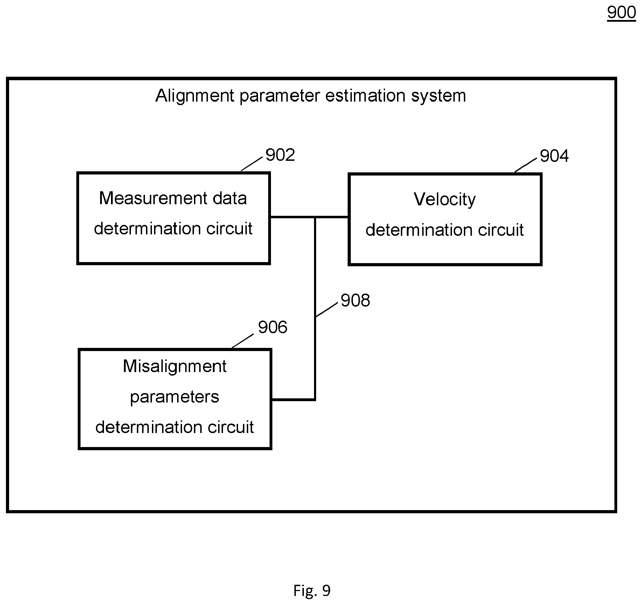

Fig. 9 shows an alignment parameter estimation system 900 according to various embodiments. The alignment parameter estimation system 900 may include a measurement data determination circuit 902, a velocity determination circuit 904, and a misalignment parameters determination circuit 906.

The measurement data determination circuit 902 may be configured to determine measurement data using a radar sensor, the measurement data comprising a range-rate measurement, an azimuth measurement, and an elevation measurement. The radar sensor may be a part of the measurement data determination circuit 902, or may be provided external to the measurement data determination circuit 902.

The velocity determination circuit 904 may be configured to determine a velocity of the radar sensor. The velocity sensor may be a part of the velocity determination circuit 904, or may be provided external to the velocity determination circuit 904.

The misalignment parameters determination circuit 906 may be configured to determine misalignment parameters of the radar sensor based on the measurement data and the velocity, the misalignment parameters comprising an azimuth misalignment, an elevation misalignment, and a roll misalignment

The measurement data determination circuit 902, the velocity determination circuit 904, and the misalignment parameters determination circuit 906 may be coupled with each other, e.g. via an electrical connection 908, such as e.g. a cable or a computer bus or via any other suitable electrical connection to exchange electrical signals.

A "circuit" may be understood as any kind of a logic implementing entity, which may be special purpose circuitry or a processor executing a program stored in a memory, firmware, or any combination thereof.

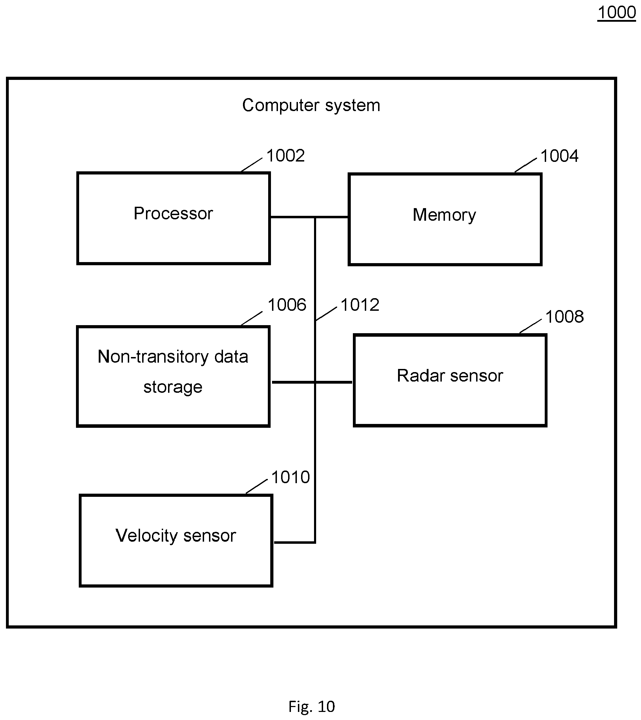

Fig. 10 shows a computer system 1000 with a plurality of computer hardware components configured to carry out steps of a computer implemented method for determining alignment parameters of a radar sensor according to various embodiments. The computer system 1000 may include a processor 1002, a memory 1004, and a non-transitory data storage 1006. A radar sensor 1008 and/or a velocity sensor 1010 may be provided as part of the computer system 1000 (like illustrated in Fig. 10), or may be provided external to the computer system 1000.

The processor 1002 may carry out instructions provided in the memory 1004. The non-transitory data storage 1006 may store a computer program, including the instructions that may be transferred to the memory 1004 and then executed by the processor 1002. The radar sensor 1008 may be used for determining measurement data as described above. The velocity sensor 1010 may be used to determine the velocity as described above.

The processor 1002, the memory 1004, and the non-transitory data storage 1006 may be coupled with each other, e.g. via an electrical connection 1012, such as e.g. a cable or a computer bus or via any other suitable electrical connection to exchange electrical signals. The radar sensor 1008 and/or the velocity sensor 1010 may be coupled to the computer system 1000, for example via an external interface, or may be provided as parts of the computer system (in other words: internal to the computer system, for example coupled via the electrical connection 1012).

The terms "coupling" or "connection" are intended to include a direct "coupling" (for example via a physical link) or direct "connection" as well as an indirect "coupling" or indirect "connection" (for example via a logical link), respectively.

It will be understood that what has been described for one of the methods above may analogously hold true for the alignment parameter estimation system 900 and/or for the computer system 1000.

In the following, further embodiments will be described. These embodiments may provide simultaneous estimation of host vehicle velocity and radar misalignment based on multiple Doppler radars detections.

As used herein, various coordinate systems may be used.

An ISO - earth fixed coordinate system may be based on an axis system which remains fixed in the inertial reference frame. The origin of this coordinate system may be fixed on the ground plane. The position and orientation may be chosen in an arbitrary manner (for example based on the desired application). The naming in ISO standard for the system may be (xE; yE; zE).

A further coordinate system may be the vehicle coordinate system.

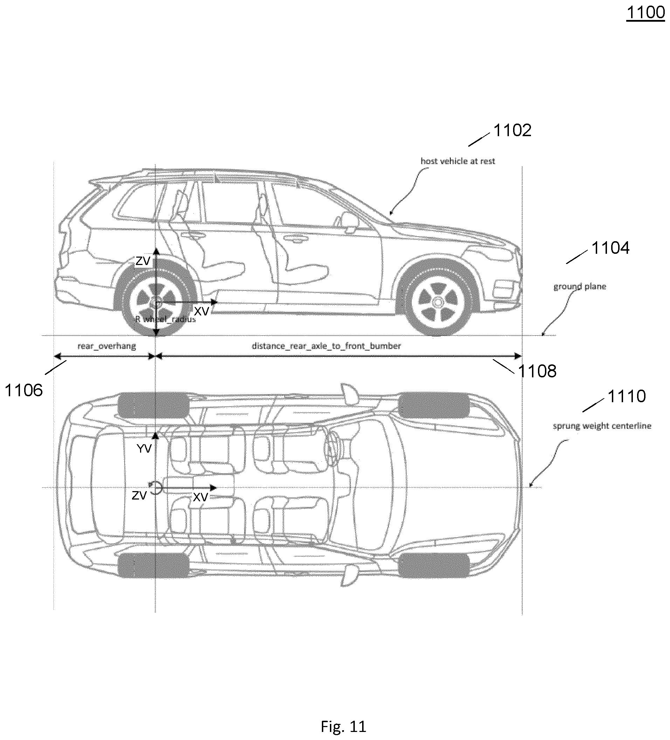

Fig. 11 shows an illustration 1100 of the vehicle coordinate system location. The vehicle coordinate system may include a right hand sided axis trio: (XV; YV; ZV). The values in coordinate system may be denoted as (xV; yV; zV). The vehicle coordinate system may be in the center of the rear axle for a vehicle in a steady state. The coordinate system may remain fixed to the vehicle sprung weight meaning that during motion or on inclinations it may not be aligned with the rear axle. The location of the VCS on the vehicle body at rest with respect to vehicle dimensions may be as presented in Fig. 11, where in a side view in the top portion of Fig. 11, the host vehicle 1102 at rest is shown on a ground plane 1104, with rear overhang 1106 and a distance 1108 between rear axle and front bumper. At top view of shown in the bottom portion of Fig. 11, with the sprung weight centerline 1110 indicated. The axis (XV; YV; ZV) are also shown in Fig. 11.

A further coordinate system may be the sensor coordinate system.

Sensors like LiDARs and radars report detections in the polar coordinate system. Each detection may be described by the trio of: range; azimuth; elevation.

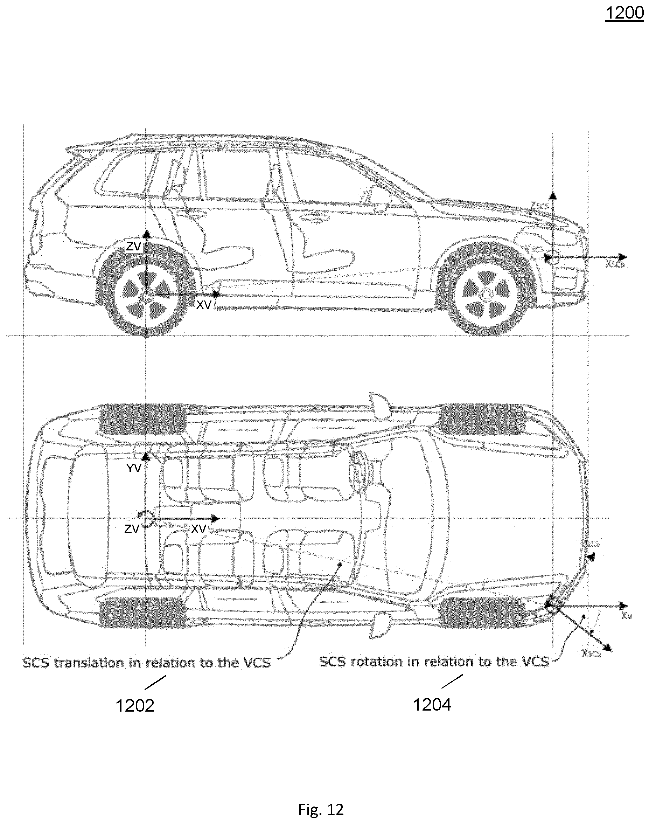

Fig. 12 shows an illustration 1200 of a sensor coordinate system with relation to the vehicle coordinate system (VCS). The origin of the sensor coordinate system may be defined in respect to the VCS by translation 1202 and rotation 1204.

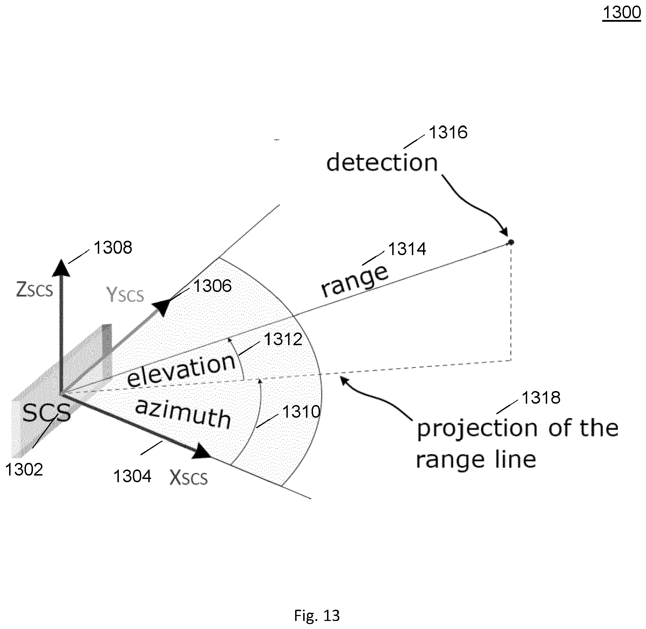

Fig. 13 shows an illustration 1300 of detection definition in the sensor coordinate systems. The sensor origin 1302, the X axis 1304, Y axis 1306, and Z axis 1308 are shown. Detection azimuth 1310 may be defined as an angle between the X axis 1304 and the projection 1318 of the line connecting the origin 1302 and the detection 1316 on the (X; Y) plane. Detection elevation 1312 may be defined as an angle between the (X; Z) plane and the line 1318 connecting the origin and the detection 1316. Detection range 1314 may be defined as the cartesian distance between the sensor origin 1302 and the detection 1316.

Every radar scan may produce a set of (radar) detections, where each of the detections may have following properties:

- range (which may be the distance from sensor origin to detection, as illustrated in Fig. 13);
- range rate (which may be the radial velocity of detection; in other words: the temporal derivative of the range);
- azimuth (for example as shown in Fig. 13); and
- elevation (for example as shown in Fig. 13).

Target planar motion may be described by:

$$V^t = [\omega^t \quad x^t \quad y^t]^T$$

The range rate equation for a single raw detection from target may given as:

$$\dot{r}^i + v_x^s \cos\theta^i + v_y^s \sin\theta^i = v_x^t \cos\theta^i + v_y^t \sin\theta^i$$

where:

- $\dot{r}^i$ - i-th detection range rate,
- $\theta^i$ - i-th detection azimuth.

To simplify the notation, the notion of a compensated range rate may be introduced and defined as:

$$\dot{r}_{cmp}^i = \dot{r}^i + v_x^s \cos\theta^i + v_y^h \sin\theta^i$$

Then range rate equation may be reduced to:

$$\dot{r}_{cmp}^i = v_x^t \cos\theta^i + v_y^t \sin\theta^i$$

In vector form, it may be described as follows:

$$\dot{r}_{cmp}^i = [\cos\theta^i \quad \sin\theta^i] \begin{bmatrix} v_x^t \\ v_y^t \end{bmatrix}$$

Coefficients $v_x^t$ and $v_y^t$ may be called *velocity profile.*

The velocity profile may be successfully estimated if at least 2 detections from one target object are available. This estimation can be done by application of least squares method or method presented in US 2019/0369228. Both methods may provide an estimation of velocity profile and its covariance matrix:

$$\widehat{v_x^t}, \qquad \widehat{v_y^t}, \qquad \sigma_{VP} = \begin{bmatrix} \sigma_{\widehat{v_x^t}}^2 & \sigma_{\widehat{v_x^t}\widehat{v_y^t}} \\ \sigma_{\widehat{v_x^t}\widehat{v_y^t}} & \sigma_{\widehat{v_y^t}}^2 \end{bmatrix}$$

The Gauss-Newton optimization method may be used for minimization of a function in quadratic form:

$$Q(\mu) = f(\mu)^T f(\mu)$$

The Gauss-Newton optimization method may include the following steps:

1. The point $\mu^0$, function $f(\mu)$ and its Jacobian matrix $J(\mu) = \dfrac{\partial f(\mu)}{\partial \mu}$ may be given initially. Set $i = 0$.

2. Set $\gamma^i = 1$.
3. Compute:

$$\mu^{i+1} = \mu^i + \gamma^i \left( J(\mu^i)^T J(\mu^i) \right)^{-1} J(\mu^i)^T f(\mu^i)$$

4. If $Q(\mu^{i+1}) > Q(\mu^i)$, set $\gamma^i = \dfrac{1}{2}\gamma^i$ and repeat from 3.
5. Terminate if stop criteria reached.
6. Otherwise set $i = i + 1$ and repeat from 2.

According to various embodiments, devices and methods may be provided for simultaneous estimation of vehicle velocity and radars misalignment angles. Such an approach may not be possible for a single radar, because only by having multiple radars, the measurement from one sensor may be corrected based on other sensors measurements.

In the following, the method for the 2D (two-dimensional) case will be described.

Range rate equation in the 2D case may have the following form:

$$-\dot{r} = v_{s,x}^{SCS} \cos\theta + v_{s,y}^{SCS} \sin\theta = [\cos\theta \quad \sin\theta] \begin{bmatrix} v_{s,x}^{SCS} \\ v_{s,y}^{SCS} \end{bmatrix}$$

where:

- $\dot{r}$ may be the range rate of detection,
- $\theta$ may be the azimuth of detection,
- $\begin{bmatrix} v_{s,x}^{SCS} & v_{s,y}^{SCS} \end{bmatrix}^T$ may be the sensor velocity reported in Sensor Coordinate System (SCS).

If a is sensor yaw angle, then the detection range rate may be a function of sensor velocity in the Vehicle Coordinate System (VCS) and may have the following form:

$$-\dot{r} = [\cos\theta \quad \sin\theta] \begin{bmatrix} \cos\alpha & \sin\alpha \\ -\sin\alpha & \cos\alpha \end{bmatrix} \begin{bmatrix} v_{s,x}^{vcs} \\ v_{s,y}^{vcs} \end{bmatrix} == [\cos(\theta+\alpha) \quad \sin(\theta+\alpha)] \begin{bmatrix} v_{s,x}^{vcs} \\ v_{s,y}^{vcs} \end{bmatrix}$$

where

- $\begin{bmatrix} v_{s,x}^{vcs} & v_{s,y}^{vcs} \end{bmatrix}^T$ may be the sensor velocity reported in Vehicle Coordinate System (VCS), and
- the sensor yaw angle $\alpha$ may be the sum of the calibration angle $\alpha_0$ and the misalignment angle $\alpha_m$:

$$\alpha = \alpha_0 + \alpha_m$$

The sensor velocity may be also presented as function of host velocity in VCS:

$$\begin{cases} v_{s,x}^{vcs} = v_{h,x}^{vcs} - \omega\Delta y \\ v_{s,x}^{vcs} = v_{h,y}^{vcs} + \omega\Delta x \end{cases}$$

where

- $\begin{bmatrix} v_{h,x}^{vcs} & v_{h,y}^{vcs} \end{bmatrix}^T$ may be the host velocity reported in Vehicle Coordinate System (VCS),
- $\omega$ may be the host yaw rate,
- $\Delta x, \Delta y$ may be the position of radar in VCS.

Based on those equation range rate equation may be written as:

$$-\dot{r} = [\cos(\alpha_0 + \alpha_m + \theta) \quad \sin(\alpha_0 + \alpha_m + \theta)] \begin{bmatrix} v_{h,x}^{vcs} - \omega\Delta y \\ v_{h,y}^{vcs} + \omega\Delta x \end{bmatrix}$$

Taking into account all static detections from all radars may provide the following system of equations:

$$\begin{bmatrix} -\dot{r}_1^1 \\ -\dot{r}_2^1 \\ \vdots \\ -\dot{r}_{N_1}^1 \\ -\dot{r}_1^2 \\ \vdots \\ -\dot{r}_{N_M}^M \end{bmatrix} = \begin{bmatrix} \cos(\alpha_0^1 + \alpha_m^1 + \theta_1^1)\left[v_{h,x}^{vcs} - \omega\Delta y\right] + \sin(\alpha_0^1 + \alpha_m^1 + \theta_1^1)[v_{h,y}^{vcs} + \omega\Delta x] \\ \cos(\alpha_0^1 + \alpha_m^1 + \theta_2^1)\left[v_{h,x}^{vcs} - \omega\Delta y\right] + \sin(\alpha_0^1 + \alpha_m^1 + \theta_2^1)[v_{h,y}^{vcs} + \omega\Delta x] \\ \vdots \\ \cos(\alpha_0^1 + \alpha_m^1 + \theta_{N_1}^1)\left[v_{h,x}^{vcs} - \omega\Delta y\right] + \sin(\alpha_0^1 + \alpha_m^1 + \theta_{N_1}^1)[v_{h,y}^{vcs} + \omega\Delta x] \\ \cos(\alpha_0^2 + \alpha_m^2 + \theta_1^2)\left[v_{h,x}^{vcs} - \omega\Delta y\right] + \sin(\alpha_0^2 + \alpha_m^2 + \theta_1^2)[v_{h,y}^{vcs} + \omega\Delta x] \\ \vdots \\ \cos(\alpha_0^M + \alpha_m^M + \theta_{N_M}^M)\left[v_{h,x}^{vcs} - \omega\Delta y\right] + \sin(\alpha_0^M + \alpha_m^M + \theta_{N_M}^M)[v_{h,y}^{vcs} + \omega\Delta x] \end{bmatrix}$$

In short, this may be written as:

$$-\dot{\bar{r}} = \boldsymbol{h}(\bar{\rho})$$

$$\bar{\rho} = \begin{bmatrix} v_{h,x}^{vcs} \\ v_{h,x}^{vcs} \\ \omega \\ \alpha_m^1 \\ \vdots \\ \alpha_m^M \end{bmatrix}$$

where

Based on this, the vector $\overline{\rho}$ of host velocity and radar alignments may be found by optimization of the following function:

$$f(\bar{\rho}) = \boldsymbol{h}(\bar{\rho}) + \dot{\bar{r}}$$

This optimization may be done by the Gauss-Newton method as described above, where the Jacobian matrix has the following form:

$$J(\bar{\rho}) = \begin{bmatrix} \dfrac{\partial h_1^1(\bar{\rho})}{\partial v_{h,x}^{vcs}} & \cdots & \dfrac{\partial h_1^1(\bar{\rho})}{\partial \alpha_m^M} \\ \vdots & \ddots & \vdots \\ \dfrac{\partial h_{N_M}^M(\bar{\rho})}{\partial v_{h,x}^{vcs}} & \cdots & \dfrac{\partial h_{N_M}^M(\bar{\rho})}{\partial \alpha_m^M} \end{bmatrix}$$

where:

$$\frac{\partial h_k^l(\bar{\rho})}{\partial v_{h,x}^{vcs}} = \cos(\alpha_0^k + \alpha_m^k + \theta_k^l),$$

-

- $$\frac{\partial h_k^l(\bar{p})}{\partial v_{h,y}^{vcs}} = \sin\left(\alpha_0^k + \alpha_m^k + \theta_k^l\right),$$

- $$\frac{\partial h_k^l(\bar{p})}{\partial \omega} = \sin\left(\alpha_0^k + \alpha_m^k + \theta_k^l\right)\Delta x - \cos\left(\alpha_0^k + \alpha_m^k + \theta_k^l\right)\Delta y,$$

- $$\frac{\partial h_k^l(\bar{p})}{\partial \alpha_m^k} = -\sin\left(\alpha_0^k + \alpha_m^k + \theta_k^l\right)\left[v_{h,x}^{vcs} - \omega\Delta y\right] + \cos\left(\alpha_0^k + \alpha_m^k + \theta_k^l\right)\left[v_{h,y}^{vcs} + \omega\Delta x\right], \text{ otherwise}$$

$$\frac{\partial h_k^l(\bar{p})}{\partial \alpha_m^l} = 0.$$

Based on this Jacobian matrix, the Hessian matrix may be approximated in the following form:

$$J(\bar{p})^T J(\bar{p}) = \begin{bmatrix} H_{11} & \cdots & H_{1(M+3)} \\ \vdots & \ddots & \vdots \\ * & \cdots & H_{(M+3)(M+3)} \end{bmatrix}$$

$$H_{ij} = \sum_{k=1}^{M}\left\{\sum_{l=1}^{N_k}\left[\frac{\partial h_k^l}{\partial \rho_i}\frac{\partial h_k^l}{\partial \rho_j}\right]\right\}$$

where:

Moreover, for the optimization method, the matrix

$$J(\bar{p})^T f\left(\dot{\bar{r}} + h(\bar{p})\right)$$

may be needed, and it may be calculated as:

$$J(\bar{p})^T f\left(\dot{\bar{r}} + h(\bar{p})\right) = \begin{bmatrix} \sum_{k=1}^{M}\left\{\sum_{l=1}^{N_k}\left[\frac{\partial h_k^l}{\partial \rho_1}\left(\dot{r}_k^l + h_k^l\right)\right]\right\} \\ \vdots \\ \sum_{k=1}^{M}\left\{\sum_{l=1}^{N_k}\left[\frac{\partial h_k^l}{\partial \rho_{(3+\sum_{j=1}^{M} N_j)}}\left(\dot{r}_k^l + h_k^l\right)\right]\right\} \end{bmatrix}$$

In the following, the 3D case will be described.
In the 3D case, the range rate equation may have the following form:

$$-\dot{r} = \cos\theta\sin\varphi\, v_{s,x}^{scs} + \sin\theta\cos\varphi\, v_{s,y}^{scs} - \sin\varphi\, v_{s,z}^{scs}$$

$$= [\cos\theta\sin\varphi \quad \sin\theta\cos\varphi \quad -\sin\varphi]\begin{bmatrix} v_{s,x}^{scs} \\ v_{s,y}^{scs} \\ v_{s,z}^{scs} \end{bmatrix}$$

where:

- $\begin{bmatrix} v_{s,x}^{SCS} & v_{s,y}^{SCS} & v_{s,z}^{SCS} \end{bmatrix}^T$ may be the sensor velocity in Sensor Coordinate System (SCS),
- $\theta$ may be the azimuth of detection,
- $\varphi$ may be the elevation of detection.

In this case, radar orientation may be assumed to be in 3D, so it may have yaw, pitch and roll angle:

$$\bar{\alpha} = \begin{bmatrix} \alpha_r \\ \alpha_p \\ \alpha_y \end{bmatrix}$$

Also, in this case real orientation may be the sum of calibrated orientation and misalignment:

$$\bar{\alpha} = \bar{\alpha}_0 + \bar{\alpha}_m = \begin{bmatrix} \alpha_{0,r} \\ \alpha_{0,p} \\ \alpha_{0,y} \end{bmatrix} + \begin{bmatrix} \alpha_{m,r} \\ \alpha_{m,p} \\ \alpha_{m,y} \end{bmatrix}$$

Taking this orientation into account, the range rate may be presented by sensor velocity in VCS by the following equation:

$$-\dot{r} = \begin{bmatrix} \cos\theta\sin\varphi & \sin\theta\cos\varphi & -\sin\varphi \end{bmatrix} R(\bar{\alpha})^T \begin{bmatrix} v_{s,x}^{vcs} \\ v_{s,y}^{vcs} \\ v_{s,z}^{vcs} \end{bmatrix}$$

where

- $\begin{bmatrix} v_{s,x}^{vcs} & v_{s,y}^{vcs} & v_{s,z}^{vcs} \end{bmatrix}^T$ may be the velocity of sensor in Vehicle Coordinate System (VCS),
- $R(\bar{\alpha})$ may be a rotation 3D matrix obtained by rotation around axes in following order: OZ, OY, OX.

To simplify calculations, the following assumptions may be reasonable:

$$\alpha_{m,\cdot} \approx 0,$$

$$\alpha_{0,r} = 0,$$

$$v_{s,z}^{vcs} \approx 0.$$

It will be understood that the dot in the first assumption may stand for r and/or p, and/or y.
Then the rotation matrix may have the following form:

$$R(\bar{\alpha}) = \begin{bmatrix} r_{11} & r_{12} & r_{13} \\ r_{21} & r_{22} & r_{23} \\ r_{31} & r_{32} & r_{33} \end{bmatrix}$$

where:

- $r_{11} = \cos\alpha_{0,y} - \alpha_{m,y}\sin\alpha_{0,y}$,
- $r_{21} = -(\sin\alpha_{0,y} + \alpha_{m,y}\cos\alpha_{0,y})(\cos\alpha_{p,0} - \alpha_{m,p}\sin\alpha_{0,p})$,

- $r_{31}$ = sin $\alpha_{0,p}$ + $\alpha_{m,p}$ cos $\alpha_{0,p}$,
- $r_{12}$ = (sin $\alpha_{0,y}$ + $\alpha_{m,y}$ cos $\alpha_{0,y}$) + $\alpha_{m,r}$(cos $\alpha_{0,y}$ - $\alpha_{m,y}$ sin $\alpha_{0,y}$)(sin $\alpha_{0,p}$ + $\alpha_{m,p}$ cos $\alpha_{0,p}$),
- $r_{22}$ = (cos $\alpha_{0,y}$ - $\alpha_{m,y}$ sin $\alpha_{0,y}$) - $\alpha_{m,r}$(sin $\alpha_{0,y}$ - $\alpha_{m,y}$cos $\alpha_{0,y}$)(sin $\alpha_{0,p}$ + $\alpha_{m,p}$ cos $\alpha_{0,p}$),
- $r_{32}$ = -$\alpha_{m,r}$(cos $\alpha_{0,p}$ - $\alpha_{m,p}$ sin $\alpha_{0,p}$),
- $r_{13}$ = (sin $\alpha_{0,y}$ + $\alpha_{m,y}$ cos $\alpha_{0,y}$) - $\alpha_{m,r}$(cos $\alpha_{0,y}$ - $\alpha_{m,y}$ sin $\alpha_{0,y}$)(sin $\alpha_{0,p}$ + $\alpha_{m,p}$ cos $\alpha_{0,p}$),
- $r_{23}$ = -$\alpha_{m,r}$(cos $\alpha_{0,y}$ - $\alpha_{m,y}$ sin $\alpha_{0,y}$) + (sin $\alpha_{0,y}$ + $\alpha_{m,y}$ cos $\alpha_{0,y}$)(sin $\alpha_{0,p}$ + $\alpha_{0,p}$ cos $\alpha_{0,p}$),
- $r_{33}$ = cos $\alpha_{0,p}$ - $\alpha_{m,p}$ sin $\alpha_{0,p}$.

Summing up all of these equations, the range rate equation may be written as:

$$-\dot{r} = v_{s,x}^{vcs}(\cos\theta\cos\varphi\, r_{11} + \sin\theta\cos\varphi\, r_{21} - \sin\varphi\, r_{31}) + v_{h,y}^{vcs}(\cos\theta\cos\varphi\, r_{12}$$
$$+ \sin\theta\cos\varphi\, r_{22} - \sin\varphi\, r_{32})$$

Taking into account all detections from all radars, an optimization problem may be formulated for finding the host velocity and radars misalignments angles (which may be similar to the 2D case as described above):

$$-\dot{\bar{r}} = h(\bar{\gamma})$$

$$\bar{\gamma} = \begin{bmatrix} v_{hx}^{vcs} \\ v_{hy}^{vcs} \\ \omega \\ \alpha_{m,y}^1 \\ \alpha_{m,p}^1 \\ \alpha_{m,r}^1 \\ \alpha_{m,y}^2 \\ \vdots \\ \alpha_{m,p}^M \\ \alpha_{m,r}^M \end{bmatrix}$$

where:

This may be solved by a nonlinear least squares method with usage of a Gauss-Newton method, as described above, for which the Jacobian may be provided in the following form:

$$J(\bar{\gamma}) = \begin{bmatrix} \dfrac{\partial h_1^1(\bar{\gamma})}{\partial v_{h,x}^{vcs}} & \cdots & \dfrac{\partial h_1^1(\bar{\gamma})}{\partial \alpha_m^M} \\ \vdots & \ddots & \vdots \\ \dfrac{\partial h_{N_M}^M(\bar{\gamma})}{\partial v_{h,x}^{vcs}} & \cdots & \dfrac{\partial h_{N_M}^M(\bar{\gamma})}{\partial \alpha_m^M} \end{bmatrix}$$

where:

- $\dfrac{\partial h(\nu)}{\partial v_{sx}^{vcs}} = \cos\theta_i\cos\varphi_i(c_{\alpha_{y,0}} - \alpha_{y,m}s_{\alpha_{y,0}}) + \sin\theta_i\cos\varphi_i(-(s_{\alpha_{y,0}} + \alpha_{y,m}c_{\alpha_{y,0}})(c_{\alpha_{p,0}} - \alpha_{p,m}s_{\alpha_{p,0}})) - \sin\varphi_i(s_{\alpha_{p,0}} + \alpha_{p,m}c_{\alpha_{p,0}})$,

- $\dfrac{\partial h(\nu)}{\partial v_{sy}^{vcs}} = \cos\theta_i\cos\varphi_i((s_{\alpha_{y,0}} + \alpha_{y,m}c_{\alpha_{y,0}}) + \alpha_{r,m}(c_{\alpha_{y,0}} - \alpha_{y,m}s_{\alpha_{y,0}})(s_{\alpha_{p,0}} + \alpha_{p,m}c_{\alpha_{p,0}})) + \sin\theta_i\cos\varphi_i((c_{\alpha_{y,0}} - \alpha_{y,m}s_{\alpha_{y,0}}) - \alpha_{r,m}(s_{\alpha_{y,0}} + \alpha_{y,m}c_{\alpha_{y,0}})(s_{\alpha_{p,0}} + \alpha_{p,m}c_{\alpha_{p,0}})) + \sin\varphi_i(\alpha_{r,m}(c_{\alpha_{p,0}} - \alpha_{p,m}s_{\alpha_{p,0}}))$,

$$\frac{\partial h(\nu)}{\partial \omega} = \Delta x \frac{\partial h(\nu)}{\partial v_{sy}^{vcs}} - \Delta y \frac{\partial h(\nu)}{\partial v_{sx}^{vcs}},$$

$$\frac{\partial h(\nu)}{\partial \alpha_{y,m}^i} = -(v_{sx}^{vcs} - \Delta y \omega)[c_1 s_{\alpha_{y,0}^i} + c_2 c_{\alpha_{y,0}^i}(c_{\alpha_{y,0}^i} - \alpha_{p,m}^i s_{\alpha_{p,0}^i})] + (v_{sy}^{vcs} + \Delta x \omega)[c_1(c_{\alpha_{y,0}^i} - s_{\alpha_{y,0}^i}(s_{\alpha_{p,0}^i} + \alpha_{p,m} c_{\alpha_{p,0}^i})) - c_2(s_{\alpha_{y,0}^i} + \alpha_{r,m}^i c_{\alpha_{y,0}^i}(s_{\alpha_{y,0}^i} + \alpha_{p,m}^i c_{\alpha_{p,0}^i}))],$$

$$\frac{\partial h(\nu)}{\partial \alpha_{p,m}^i} = (v_{sx}^{vcs} - \Delta y \omega)[c_2 \alpha_{p,0}^i(s_{\alpha_{y,0}^i} - \alpha_{y,m}^i c_{\alpha_{y,0}^i}) + c_3 c_{\alpha_{p,0}^i}] + (v_{sx}^{vcs} + \Delta x \omega)[c_1 c_{\alpha_{p,0}^i} \alpha_{r,m}^i(c_{\alpha_{y,0}^i} - \alpha_{y,m}^i s_{\alpha_{y,0}^i}) + c_2 \alpha_{r,m}^i c_{\alpha_{p,0}^i}(s_{\alpha_{y,0}^i} - \alpha_{y,m}^i c_{\alpha_{y,0}^i}) + c_3 \alpha_{r,m}^i c_{\alpha_{p,0}^i}],$$

$$\frac{\partial h(\nu)}{\partial \alpha_{r,m}^i} = (v_{sx}^{vcs} + \Delta x \omega)[c_1(c_{\alpha_{y,0}^i} - \alpha_{y,m}^i s_{\alpha_{y,0}^i})(s_{\alpha_{p,0}^i} + \alpha_{p,0}^i c_{\alpha_{p,0}^i}) - c_2(s_{\alpha_{y,0}^i} + \alpha_{y,m}^i c_{\alpha_{y,0}^i})(s_{\alpha_{p,0}^i} + \alpha_{p,m}^i c_{\alpha_{p,0}^i}) - c_3(c_{\alpha_{p,0}^i} - \alpha_{p,m}^i s_{\alpha_{y,0}^i})].$$

Reference numeral list

| | |
|---|---|
| 100 | illustration of a radar field-of-view when misaligned in azimuth and elevation |
| 102 | horizontal line |
| 104 | vertical split line |
| 106 | ideal facing angle |
| 108 | real facing angle |
| 110 | radar field-of-view |
| 112 | misalignment |
| | |
| 150 | illustration of a three-dimensional misalignment in azimuth, elevation, and roll |
| 152 | x axis |
| 154 | y axis |
| 156 | z axis |
| 158 | ground plane |
| 160 | actual boresight direction |
| 162 | desired field of view |
| 164 | actual field of view |
| | |
| 200 | flow diagram illustrating an overview of methods for determining alignment parameters according to various embodiments |
| 202 | data acquisition |
| 204 | regression |
| 206 | filtering |
| | |
| 300 | illustration of a radar field-of-view after introduction of roll misalignment |
| 302 | illustration from the ground perspective |
| 304 | illustration from the sensor perspective |
| | |
| 400 | illustration of a radar field-of-view and a compensated field-of-view according to various embodiments |
| 402 | compensated field-of-view |
| | |
| 500 | diagram illustrating azimuth alignment error distribution according to various embodiments |
| 502 | horizontal axis |
| 504 | vertical axis |
| 506 | curve illustrating results for a 2 axial alignment |
| 508 | curve illustrating results for a 3 axial alignment NL-LS method according to various embodiments |
| 510 | curve illustrating results for a 3 axial alignment NL-TLS method according to various embodiments |

| | |
|---|---|
| 600 | diagram illustrating elevation alignment error distribution according to various embodiments |
| 602 | horizontal axis |
| 604 | vertical axis |
| 606 | curve illustrating results for a 2 axial alignment |
| 608 | curve illustrating results for a 3 axial alignment NL-LS method according to various embodiments |
| 610 | curve illustrating results for a 3 axial alignment NL-TLS method according to various embodiments |
| | |
| 700 | diagram illustrating roll alignment error distribution according to various embodiments |
| 702 | horizontal axis |
| 704 | vertical axis |
| 706 | curve illustrating results for a 3 axial alignment NL-LS method according to various embodiments |
| 708 | curve illustrating results for a 3 axial alignment NL-TLS method according to various embodiments |
| | |
| 800 | flow diagram illustrating a method for determining alignment parameters of a radar sensor according to various embodiments |
| 802 | step of determining measurement data using the radar sensor |
| 804 | step of determining a velocity of the radar sensor |
| 806 | step of determining the misalignment parameters based on the measurement data and the velocity |
| | |
| 900 | alignment parameter estimation system according to various embodiments |
| 902 | measurement data determination circuit |
| 904 | velocity determination circuit |
| 906 | misalignment parameters determination circuit |
| 908 | connection |
| | |
| 1000 | computer system according to various embodiments |
| 1002 | processor |
| 1004 | memory |
| 1006 | non-transitory data storage |
| 1008 | radar sensor |
| 1010 | velocity sensor |
| 1012 | connection |
| | |
| 1100 | illustration of the vehicle coordinate system location |
| 1102 | host vehicle |
| 1104 | ground plane |
| 1106 | rear overhang |
| 1108 | front bumper |
| 1110 | sprung weight centerline |
| | |
| 1200 | illustration of a sensor coordinate system with relation to the vehicle coordinate system (VCS) |
| 1202 | translation |
| 1204 | rotation |
| | |
| 1300 | illustration of detection definition in the sensor coordinate systems |
| 1302 | sensor origin |
| 1304 | X axis |
| 1306 | Y axis |
| 1308 | Z axis |
| 1310 | detection azimuth |
| 1312 | detection elevation |
| 1314 | detection range |
| 1316 | detection |
| 1318 | projection of the line connecting the origin and the detection on the (X; Y) plane |

**Claims**

1. Computer implemented method for determining alignment parameters of a radar sensor,
   the method comprising the following steps carried out by computer hardware components:

   - determining measurement data using the radar sensor, the measurement data comprising a range-rate measurement, an azimuth measurement, and an elevation measurement;
   - determining a velocity of the radar sensor; and
   - determining the misalignment parameters based on the measurement data and the velocity, the misalignment parameters comprising an azimuth misalignment, an elevation misalignment, and a roll misalignment.

2. The computer implemented method of claim 1,
   wherein the misalignment parameters further comprise a speed-scaling error.

3. The computer implemented method of at least one of claims 1 or 2, further comprising the following step carried out by the computer hardware components:

   determining system parameters, the system parameters comprising at least one of a desired azimuth mounting angle, a desired elevation mounting angle, and a desired roll mounting angle;
   wherein the misalignment parameters are determined further based on the system parameters.

4. The computer implemented method of at least one of claims 1 to 3,
   wherein the measurement data is related to a plurality of objects external to the radar sensor.

5. The computer implemented method of claim 4,
   wherein the plurality of objects are stationary.

6. The computer implemented method of at least one of claims 1 to 5,
   wherein the misalignment parameters are determined based on an iterative method.

7. The computer implemented method of at least one of claims 1 to 6,
   wherein the misalignment parameters are determined based on an optimization method.

8. The computer implemented method of at least one of claims 1 to 7,
   wherein the misalignment parameters are determined based on a non-linear least squares regression method; and/or
   wherein the misalignment parameters are determined based on an non-linear total least squares regression method; and/or
   wherein the misalignment parameters are determined based on filtering.

9. The computer implemented method of at least one of claims 1 to 8,
   wherein the measurement data are determined using a plurality of radar sensors.

10. The computer implemented method of claim 9,
    wherein the velocity of the radar sensor and the misalignment parameters are determined simultaneously by solving an optimization problem.

11. Computer implemented method for determining corrected measurement data,
    the method comprising the following steps carried out by computer hardware components:

    determining measurement data using a radar sensor;
    correcting the measurement data to obtain the corrected measurement data based on misalignment parameters determined according to the computer-implemented method of at least one of claims 1 to 10.

12. Computer system, the computer system comprising a plurality of computer hardware components configured to carry out steps of the computer implemented method of at least one of claims 1 to 11.

13. A radar system comprising a radar sensor for which the misalignment parameters are determined according to the computer implemented method of at least one of claims 1 to 11.

14. A vehicle comprising the radar system of claim 13.

15. Non-transitory computer readable medium comprising instructions for carrying out the computer implemented method of at least one of claims 1 to 11.

Fig. 1A

150

actual boresight
direction due to
misalignment

164

desired boresight
direction for perfect
alignment

160

156

$Z_{VCS}$

actual FOV
(misaligned)

$\gamma$

$\beta$

$\alpha$

152

$X_{VCS}$

162

158

SENSOR
MOUNTING
LEVEL

GROUND
LEVEL

desired FOV
(corrected)

GROUND
PLANE

154

$Y_{VCS}$

Fig. 1B

200

**202**

**Data acquisition**

- Stationary detections
- Vehicle velocities
- Radar information

**204**

**Regression**

- Estimation of azimuth misalignment
- Estimation of elevation misalignment
- Estimation of roll misalignment
- Estimation of speed-scaling error

**206**

**Filtering**

Fig. 2

Fig. 3

400

Compensated field of view — 402

Vertical split line at front of the vehicle (0 [deg])

104

Radar field of view

110

108

106

102

Horizon line

112

Fig. 4

Fig. 5

Fig. 6

700

Figure 7 Instantenious roll alignment error distribution (500 000 samples)

Fig. 7

800

| Determine measurement data using the radar sensor | 802 |

| Determine a velocity of the radar sensor | 804 |

| Determine the misalignment parameters based on the measurement data and the velocity | 806 |

Fig. 8

900

Alignment parameter estimation system

902

Measurement data
determination circuit

904

Velocity
determination circuit

908

906

Misalignment
parameters
determination circuit

Fig. 9

1000

Computer system

- Processor 1002
- Memory 1004
- Non-transitory data storage 1006
- 1012
- Radar sensor 1008
- Velocity sensor 1010

Fig. 10

1100

Fig. 11

1200

SCS translation in relation to the VCS

1202

SCS rotation in relation to the VCS

1204

Fig. 12

1300

Fig. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190369228 A